# EUROPEAN PATENT APPLICATION

(11) **EP 4 624 835 A1**
(43) Date of publication of application: **01.10.2025**
(21) Application number: 25729038.7
(22) Date of filing: 06.02.2025
(51) Int. Cl.: F25D 23/00, F25D 11/00, F25D 29/00

(54) **CONTAINER SYSTEM**

(30) Priority: 09.02.2024 JP 2024018971
(71) Applicant: Daikin Industries, Ltd., Osaka-shi, Osaka 530-0001 (JP)
(72) Inventor: IKEMIYA, Makoto, Osaka-shi, Osaka 530-0001 (JP); TAGAWA, Hirotaka, Osaka-shi, Osaka 530-0001 (JP)
(74) Representative: Hoffmann Eitle
(86) International application number: PCT/JP2025/003971
(87) International publication number: WO 2025/170000

(57) **Abstract**

A shipping container (10) includes a container body (11), and a refrigeration apparatus (20) connected to the container body (11). The refrigeration apparatus (20) includes a cooling unit (20a) configured to cool the inside of the container body (11). The shipping container (10) includes an aperture (17) and an opening/closing portion (18) configured to open and close the aperture (17). The control unit (75) outputs second information for determining whether unusual opening of the aperture (17) is present based on first information about an operating state of the cooling unit (20a) at the time the aperture (17) is opened.

## Description

### TECHNICAL FIELD

The present disclosure relates to a container system.

### BACKGROUND ART

Patent Document 1 discloses a shipping container. This shipping container is provided with a detection device that detects whether a seal is put on a door of the shipping container.

### CITATION LIST

### PATENT DOCUMENT

Patent Document 1: WO2003/275467

### SUMMARY OF THE INVENTION

### TECHNICAL PROBLEM

It is conceivable that the shipping container of Patent Document 1 is configured to determine whether unusual opening (for example, improper opening) of an aperture such as an inspection hole is present. However, it is difficult to accurately determine whether opening of an aperture is unusual opening by simply detecting the opening of the aperture.

### SOLUTION TO THE PROBLEM

The first aspect of the present disclosure is directed to a container system. The container system includes: a shipping container (10) including a container body (11) and a refrigeration apparatus (20) connected to the container body (11); and a control unit (75), wherein the refrigeration apparatus (20) includes a cooling unit (20a) configured to cool an inside of the container body (11), the shipping container (10) includes an aperture (17) and an opening/closing portion (18) configured to open and close the aperture (17), and the control unit (75) outputs second information for determining whether unusual opening of the aperture (17) is present based on first information about an operating state of the cooling unit (20a) at a time the aperture (17) is opened.

In the first aspect, unusual opening (for example, improper opening) of the aperture (17) is often conducted while the operating state of the cooling unit (20a) is not taken into consideration. Thus, it is possible to more accurately determine unusual opening of the aperture (17) by outputting the information for determining whether unusual opening of the aperture (17) is present based on the operating state of the cooling unit (20a) at the time the aperture (17) is opened.

The second aspect of the present disclosure is an embodiment of the container system of the first aspect. In the second aspect, the aperture (17) is an inspection hole (25) provided for maintenance of the cooling unit (20a).

According to the second aspect, it is possible to determine whether unusual opening of the inspection hole (25) is present. Thus, it is possible to more accurately determine unusual opening of the inspection hole (25) by outputting the information for determining whether unusual opening of the inspection hole (25) is present based on the operating state of the cooling unit (20a) at the time the inspection hole (25) is opened.

The third aspect of the present disclosure is an embodiment of the container system of the second aspect. In the third aspect, the first information includes information showing whether the cooling unit (20a) is unusual.

In the third aspect, unusual opening of the inspection hole (25) is often conducted while whether the cooling unit (20a) is unusual is not taken into consideration. Thus, it is possible to more accurately determine unusual opening of the inspection hole (25) by outputting the information for determining whether unusual opening of the inspection hole (25) is present based on whether the cooling unit (20a) is unusual when the inspection hole (25) is opened.

The fourth aspect of the present disclosure is an embodiment of the container system of the third aspect. In the fourth aspect, the cooling unit (20a) includes an internal blower (45) configured to circulate air between the inside of the container body (11) and the refrigeration apparatus (20), the inspection hole (25) is an aperture from which the internal blower (45) is exposed, and the cooling unit (20a) being unusual means the internal blower (45) being unusual.

According to the fourth aspect, it is possible to accurately determine whether unusual opening of the inspection hole (25) is present by outputting the information for determining whether unusual opening of the inspection hole (25) is present based on whether the internal blower (45) is unusual when the inspection hole (25) is opened.

The fifth aspect of the present disclosure is an embodiment of the container system of any one of the second to fourth aspects. In the fifth aspect, the first information includes information showing whether power is supplied from a power source to the cooling unit (20a).

In the fifth aspect, unusual opening of the inspection hole (25) is often conducted while whether power is supplied from the power source to the cooling unit (20a) is not taken into consideration. Thus, it is possible to more accurately determine unusual opening of the inspection hole (25) by outputting the information for determining whether unusual opening of the inspection hole (25) is present based on whether power is supplied from the power source to the cooling unit (20a) when the inspection hole (25) is opened.

The sixth aspect of the present disclosure is an embodiment of the container system of any one of the second to fifth aspects. In the sixth aspect, the control unit (75) outputs the second information based on the first information at a time the aperture (17) is opened and information for checking whether maintenance of the cooling unit (20a) needs to be conducted when the aperture (17) is opened.

In the sixth aspect, unusual opening of the inspection hole (25) is often conducted while whether maintenance of the cooling unit (20a) needs to be conducted is not taken into consideration. Thus, it is possible to more accurately determine unusual opening of the inspection hole (25) by outputting the information for determining whether unusual opening of the inspection hole (25) is present based on not only the operating state of the cooling unit (20a) at the time the inspection hole (25) is opened but also whether maintenance of the cooling unit (20a) needs to be conducted when inspection hole (25) is opened.

The seventh aspect of the present disclosure is an embodiment of the container system of the sixth aspect. In the seventh aspect, the information for checking whether maintenance of the cooling unit (20a) needs to be conducted includes information showing a position of the shipping container (10) or information showing a schedule for maintenance of the cooling unit (20a).

According to the seventh aspect, it is possible to check whether maintenance of the cooling unit (20a) needs to be conducted based on the information showing the position of the shipping container (10) (specifically, whether the position of the shipping container (10) is a position at which maintenance of the cooling unit (20a) is conducted). **In** addition, it is possible to check whether maintenance of the cooling unit (20a) needs to be conducted based on the schedule for maintenance of the cooling unit (20a).

The eighth aspect of the present disclosure is an embodiment of the container system of the first aspect. In the eighth aspect, the aperture (17) is a gate (14) through which a content is loaded into and unloaded from the shipping container (10), the first information includes information showing whether power is supplied from a power source to the cooling unit (20a), and the control unit (75) outputs the second information based on the information showing whether power is supplied from the power source to the cooling unit (20a) when the aperture (17) is opened and information for checking whether a content needs to be loaded into and unloaded from the shipping container (10) when the aperture (17) is opened.

In the eighth aspect, unusual opening of the gate (14) is often conducted while whether power is supplied from the power source to the cooling unit (20a) and whether contents need to be loaded into and unloaded from the shipping container (10) are not taken into consideration. Thus, it is possible to more accurately determine unusual opening of the gate (14) by outputting the information for determining whether unusual opening of the gate (14) is present based on whether power is supplied from the power source to the cooling unit (20a) when the gate (14) is opened and whether contents need to be loaded into and unloaded from the shipping container (10) when the gate (14) is opened.

The ninth aspect of the present disclosure is an embodiment of the container system of the eighth aspect. **In** the ninth aspect, the information for checking whether the content needs to be loaded into and unloaded from the shipping container (10) includes information showing a position of the shipping container (10) or information showing the schedule for the content being loaded into and unloaded from the shipping container (10).

According to the ninth aspect, it is possible to check whether contents need to be loaded into and unloaded from the shipping container (10) based on the information showing the position of the shipping container (10) (specifically, whether the position of the shipping container (10) is a position at which contents are loaded into and unloaded from the shipping container (10)). In addition, it is possible to check whether contents need to be loaded into and unloaded from the shipping container (10) based on the schedule for the contents being loaded and unloaded.

The tenth aspect of the present disclosure is an embodiment of the container system of any one of the second to seventh aspects. In the tenth aspect, the container system further includes a detector (19) configured to detect whether the opening/closing portion (18) opens or closes the inspection hole (25), wherein the control unit (75) detects opening of the inspection hole (25) based on a detection result obtained by the detector (19).

According to the tenth aspect, it is possible to appropriately detect opening of the inspection hole (25).

The eleventh aspect of the present disclosure is an embodiment of the container system of the tenth aspect. In the eleventh aspect, the inspection hole (25) includes a first inspection hole (25a) and a second inspection hole (25b) arranged in a predetermined direction; the opening/closing portion (18) includes a first blocking plate (80a) capable of blocking the first inspection hole (25a), a second blocking plate (80b) capable of blocking the second inspection hole (25b), a first locking part (81) that is provided on part of the first inspection hole (25a) away from the second inspection hole (25b) in the predetermined direction, and that is capable of locking the first blocking plate (80a), a second locking part (82) that is provided on part of the second inspection hole (25b) away from the first inspection hole (25a) in the predetermined direction, and that is capable of locking the second blocking plate (80b), and a central locking part (83) that is provided between the first inspection hole (25a) and the second inspection hole (25b) in the predetermined direction, and that is capable of locking the first blocking plate (80a) and the second blocking plate (80b); the first blocking plate (80a) and the second blocking plate (80b) are locked by the first locking part (81), the second locking part (82), and the central locking part (83) while blocking the first inspection hole (25a) and the second inspection hole (25b); and when the central locking part (83) unlocks the first blocking plate (80a) and the second blocking plate (80b), the detector (19) detects opening of the inspection hole (25).

According to the eleventh aspect, it is possible to detect opening of both the first inspection hole (25a) and the second inspection hole (25b) by monitoring the central locking part (83).

The twelfth aspect of the present disclosure is an embodiment of the container system of the eleventh aspect. In the twelfth aspect, the first locking part (81) includes a first protruding part (811) protruding from a wall of the shipping container (10) and provided with a first locking hole (81a), and a first inserting part (812) that protrudes from an edge of the first blocking plate (80a) away from the second inspection hole (25b) in the predetermined direction, where the first blocking plate (80a) blocks the first inspection hole (25a), and that is capable of being inserted into the first locking hole (81a), and locks the first blocking plate (80a) by the first inserting part (812) being inserted into the first locking hole (81a); the second locking part (82) includes a second protruding part (821) protruding from the wall of the shipping container (10) and provided with a second locking hole (82a), and a second inserting part (822) that protrudes from an edge of the second blocking plate (80b) away from the first inspection hole (25a) in the predetermined direction, where the second blocking plate (80b) blocks the second inspection hole (25b), and that is capable of being inserted into the second locking hole (82a), and locks the second blocking plate (80b) by the second inserting part (822) being inserted into the second locking hole (82a); the central locking part (83) includes a third protruding part (831) protruding from the wall of the shipping container (10) and provided with a third locking hole (83a), a fourth protruding part (832) that protrudes from an edge of the first blocking plate (80a) close to the second inspection hole (25b) in the predetermined direction, where the first blocking plate (80a) blocks the first inspection hole (25a), and that is provided with the fourth locking hole (83b), a fifth protruding part (833) that protrudes from an edge of the second blocking plate (80b) close to the first inspection hole (25a) in the predetermined direction, where the second blocking plate (80b) blocks the second inspection hole (25b), and that is provided with the fifth locking hole (83c), and a locking bar (834) that is capable of being inserted into the third locking hole (83a), the fourth locking hole (83b), and the fifth locking hole (83c), and locks the first blocking plate (80a) and the second blocking plate (80b) by the locking bar (834) being inserted into the third locking hole (83a), the fourth locking hole (83b), and the fifth locking hole (83c).

According to the twelfth aspect, it is possible to detect opening of both the first inspection hole (25a) and the second inspection hole (25b) by monitoring the locking bar (834).

The thirteenth aspect of the present disclosure is an embodiment of the container system of any one of the first to twelfth aspects. In the thirteenth aspect, if opening of the aperture (17) is unusual opening, the control unit (75) reports that opening of the aperture (17) is unusual opening.

According to the thirteenth aspect, it is possible to report unusual opening of the aperture (17).

The fourteenth aspect of the present disclosure is an embodiment of the container system of any one of the first to thirteenth aspects. In the fourteenth aspect, the control unit (75) detects opening of the aperture (17) based on a change in a temperature or pressure in the shipping container (10).

According to the fourteenth aspect, it is possible to detect opening of the aperture (17) based on a change in the temperature or pressure in the shipping container (10).

The fifteenth aspect of the present disclosure is an embodiment of the container system of any one of the first to fourteenth aspects. In the fifteenth aspect, the container system further includes an illuminance sensor (65) configured to detect an illuminance in the shipping container (10), wherein the control unit (75) detects opening of the aperture (17) based on a change in the illuminance in the shipping container (10) detected by the illuminance sensor (65).

According to the fifteenth aspect, it is possible to detect opening of the aperture (17) based on a change in the illuminance in the shipping container (10).

### BRIEF DESCRIPTION OF THE DRAWINGS

[FIG. 1] FIG. 1 is a perspective view of an exemplary appearance of a shipping container as viewed from the front.
[FIG. 2] FIG. 2 is a perspective view of an exemplary appearance of the shipping container as viewed from the back.
[FIG. 3] FIG. 3 is a cross-sectional view of an exemplary cross section of the shipping container in the front-back direction.
[FIG. 4] FIG. 4 is a piping system diagram of an exemplary configuration of a cooling unit.
[FIG. 5] FIG. 5 is a block diagram of an exemplary configuration of a control system for a container system.
[FIG. 6] FIG. 6 is a flowchart of an exemplary flow of an unusual opening monitoring process according to a first embodiment.
[FIG. 7] FIG. 7 is a flowchart of an exemplary flow of an unusual opening monitoring process according to a first variation of the first embodiment.
[FIG. 8] FIG. 8 is a flowchart of an exemplary flow of an unusual opening monitoring process according to a second variation of the first embodiment.
[FIG. 9] FIG. 9 is a flowchart of an exemplary flow of an unusual opening monitoring process according to a third variation of the first embodiment.
[FIG. 10] FIG. 10 is a perspective view of an exemplary configuration of an opening/closing portion according to a fourth variation of the first embodiment.
[FIG. 11] FIG. 11 is a perspective view of an exemplary configuration of an opening/closing portion according to a fifth variation of the first embodiment.
[FIG. 12] FIG. 12 is a perspective view of an exemplary appearance of a shipping container as viewed from the front according to a sixth variation of the first embodiment.
[FIG. 13] FIG. 13 is a flowchart of an exemplary flow of an unusual opening monitoring process according to a second embodiment.
[FIG. 14] FIG. 14 is a flowchart of an exemplary flow of an unusual opening monitoring process according to a first variation of the second embodiment.

### DESCRIPTION OF EMBODIMENTS

Embodiments will be described in detail below with reference to the drawings. Note that the same reference characters denote the same or equivalent components in the drawings, and the description thereof will not be repeated. The present invention is not limited to the embodiments shown below, and various changes can be made within the scope without departing from the technical concept of the present invention. Since each of the drawings is intended to illustrate the present invention conceptually, dimensions, ratios, or numbers may be exaggerated or simplified as necessary for the sake of ease of understanding.

### (First Embodiment)

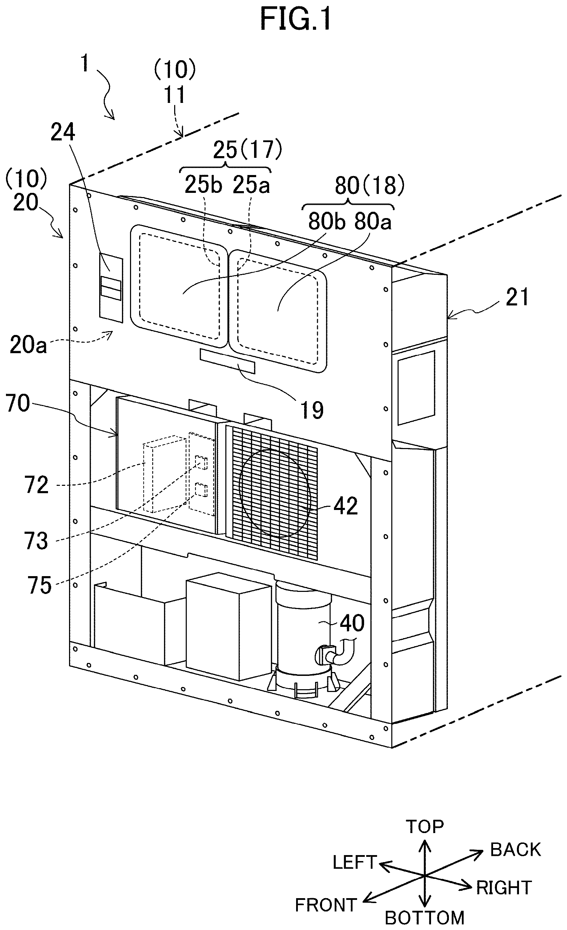

FIGS. 1 to 5 illustrate an exemplary configuration of a container system (1) according to a first embodiment. In the following description, the terms such as "front," "back," "right," "left," "top," and "bottom" refer to the directions of the arrows in FIG. 1.

As shown in FIG. 1, the container system (1) includes a shipping container (10). The shipping container (10) includes a container body (11) and a refrigeration apparatus (20) connected to the container body (11). For example, the shipping container (10) is used for marine transportation. The shipping container (10) is a refrigeration container that has a function of cooling the inside air.

### [Container Body]

The container body (11) is formed in a rectangular parallelepiped box shape that extends in the front-back direction. For example, the container body (11) stores perishables such as foods and plants. The refrigeration apparatus (20) cools an internal space (12) inside the container body (11). In the following, in some cases, the internal space (12) is referred to as "the inside of the container," and the external space of the container body (11) is referred to as "the outside of the container."

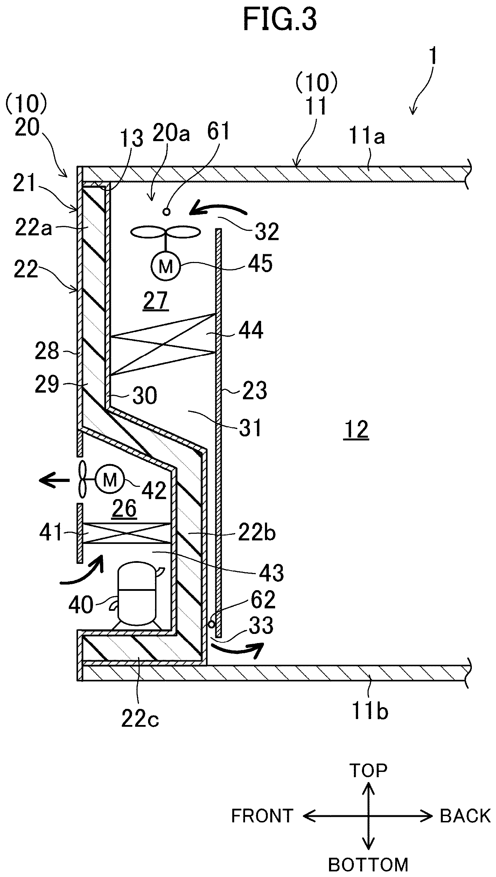

As shown in FIG. 3, the container body (11) includes a front surface on which an aperture (13) is formed. The refrigeration apparatus (20) is attached to the container body (11) so as to close the aperture (13) of the container body (11).

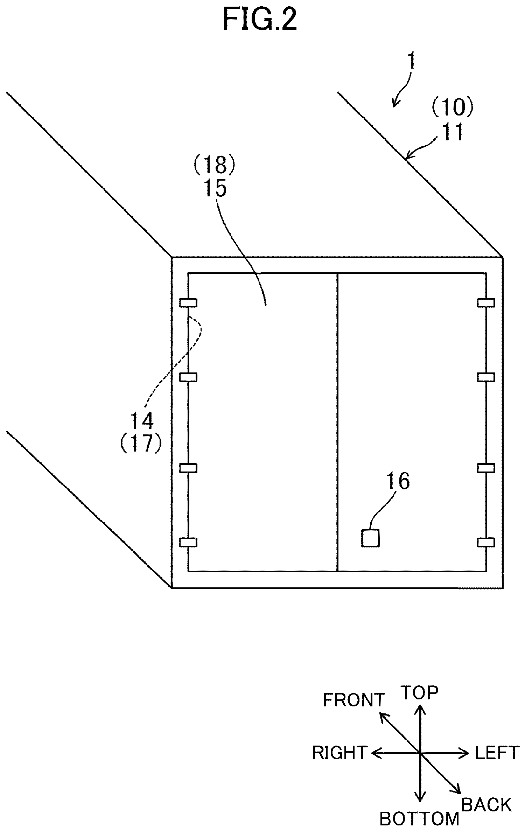

As shown in FIG. 2, the back side of the container body (11) is provided with a gate (14), a door (15), and a door opening/closing detector (16). The gate (14) is an aperture through which contents are loaded into and unloaded from the shipping container (10). The door (15) opens and closes the gate (14). The door opening/closing detector (16) detects whether the door (15) opens or closes the gate (14). The door opening/closing detector (16) can employ a known opening/closing detection technique. For example, the door opening/closing detector (16) may be a magnetic opening/closing sensor that detects opening and closing based on a change in the magnetic force between the two parts.

### [Refrigeration Apparatus]

The refrigeration apparatus (20) includes a casing (21). The casing (21) forms the lid of the aperture (13) of the container body (11). The casing (21) includes a casing body (22) and a partition plate (23). The casing body (22) separates the inside and outside of the container body (11). The partition plate (23) is disposed near the back side (or the rear side) of the casing (21) and located in the internal space (12).

### <Casing Body>

As shown in FIG. 3, the casing body (22) includes a flat plate portion (22a) and a recessed portion (22b). The flat plate portion (22a) is an upper part of the casing body (22) that is substantially flush with the aperture (13) of the casing (21).

As shown in FIG. 1, a first inspection hole (25a) and a second inspection hole (25b) are formed in the middle part of the flat plate portion (22a) in the right-left direction. The first inspection hole (25a) is opened and closed by a first blocking plate (80a). The second inspection hole (25b) is opened and closed by a second blocking plate (80b). A ventilator (24) is provided to the left of the second inspection hole (25b). The ventilator (24) ventilates the inside of the container.

The first inspection hole (25a) and the second inspection hole (25b) are hereinafter collectively referred to as "the inspection holes (25)." The first blocking plate (80a) and the second blocking plate (80b) are collectively referred to as "the blocking plate (80)." The inspection hole (25) and the blocking plate (80) will be described in detail later.

The recessed portion (22b) is a lower part of the casing (21). The recessed portion (22b) is recessed backward from the lower end of the flat plate portion (22a). An external storage space (26) is formed in front of the recessed portion (22b). An internal storage space (27) is formed above the recessed portion (22b) and between the flat plate portion (22a) and the partition plate (23). The lower end of the recessed portion (22b) forms a bottom plate (22c). The bottom plate (22c) extends between the right and left ends of the casing body (22).

The casing body (22) includes an external casing (28), a heat insulating layer (29), and an internal casing (30), which are stacked in the thickness direction (the front-back direction). The external casing (28) faces the outside of the container. The internal casing (30) faces the inside of the container. The heat insulating layer (29) is provided between the external casing (28) and the internal casing (30).

For example, the external casing (28) is made of an aluminum material. The internal casing (30) is made of fiber-reinforced plastic (FRP). The heat insulating layer (29) is made of a foamed resin.

The partition plate (23) is a plate member located behind the recessed portion (22b). The partition plate (23) extends in the top-bottom direction while being located at a predetermined distance away from the back surface of the recessed portion (22b). An internal passage (31) through which the inside air flows is formed between the casing body (22) and the partition plate (23). An inflow port (32) is formed between the upper end of the partition plate (23) and the upper wall (11a) of the container body (11). The inflow port (32) allows the internal space (12) and the inflow end of the internal passage (31) to communicate with each other. An outflow port (33) is formed between the lower end of the partition plate (23) and the lower wall (11b) of the container body (11). The outflow port (33) allows the internal space (12) and the outflow end of the internal passage (31) to communicate with each other.

### <Cooling Unit>

The refrigeration apparatus (20) includes a cooling unit (20a). The cooling unit (20a) cools the inside of the container body (11) (the internal space (12)). In this example, the cooling unit (20a) includes a compressor (40), an external heat exchanger (41), and an external blower (42) as elements disposed outside the container, and includes an internal heat exchanger (44) and an internal blower (45) as elements disposed inside the container.

The compressor (40), the external heat exchanger (41), and the external blower (42) are provided in the external storage space (26). The compressor (40) is installed on the bottom plate (22c) of the casing (21). The compressor (40) is located in a lower part of the external storage space (26). The compressor (40) is located in a right part of the external storage space (26). Although not shown in FIG. 1, an accumulator (54) is also installed on the bottom plate (22c).

The external blower (42) is located in an upper part of the external storage space (26). In this example, the external blower (42) includes a fan such as a propeller fan, and a fan motor that rotates the fan. As shown in FIG. 3, an external passage (43) through which the external air flows is formed behind the external blower (42).

In the external storage space (26), the external heat exchanger (41) is located at the level between the external blower (42) and the compressor (40). The external heat exchanger (41) is located in the external passage (43). For example, the external heat exchanger (41) is a fin-and-tube heat exchanger.

The internal heat exchanger (44) and the internal blower (45) are provided in the internal storage space (27). The internal heat exchanger (44) is supported by the casing (21) so as to extend between the casing body (22) and the partition plate (23). For example, the internal heat exchanger (44) is a fin-and-tube heat exchanger.

The internal blower (45) is disposed upstream of the internal heat exchanger (44) in the internal passage (31). The internal blower (45) is located above the internal heat exchanger (44). In this example, the internal blower (45) includes a fan such as a propeller fan, and a fan motor that rotates the fan. The internal blower (45) is provided to circulate the air between the inside of the container body (11) (the internal space (12)) and the refrigeration apparatus (20).

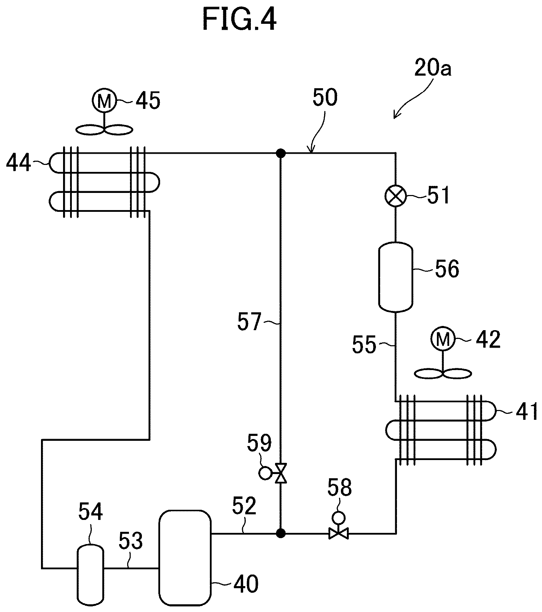

As shown in FIG. 4, the cooling unit (20a) includes a refrigerant circuit (50). The refrigerant circuit (50) is filled with a refrigerant. The refrigerant circuit (50) circulates the refrigerant to conduct a vapor compression refrigeration cycle. In this example, the refrigerant circuit (50) includes the compressor (40), the accumulator (54), the external heat exchanger (41), an expansion valve (51), a receiver (56), and the internal heat exchanger (44).

The compressor (40) compresses the sucked refrigerant and discharges the compressed refrigerant. The discharge portion of the compressor (40) is connected with a discharge pipe (52). The suction portion of the compressor (40) is connected with a suction pipe (53).

The accumulator (54) is provided in the suction pipe (53). The accumulator (54) is a container that stores a liquid refrigerant.

The external heat exchanger (41) exchanges heat between the refrigerant flowing therein and the external air. The gas end of the external heat exchanger (41) communicates with the discharge pipe (52). The liquid end of the external heat exchanger (41) is connected with the liquid end of the internal heat exchanger (44) via a liquid pipe (55). The external heat exchanger (41) functions as a radiator (condenser) through which the refrigerant dissipates heat to the air.

The expansion valve (51) is provided in the liquid pipe (55). The expansion valve (51) decompresses a high-pressure refrigerant to a low-pressure refrigerant. For example, the expansion valve (51) is an electronic expansion valve of which the opening degree is adjustable.

The receiver (56) is provided in part of the liquid pipe (55) that is between the external heat exchanger (41) and the expansion valve (51). The receiver (56) is a container that stores an excessive refrigerant of the refrigerant circuit (50).

The internal heat exchanger (44) exchanges heat between the refrigerant flowing therein and the inside air. The gas end of the internal heat exchanger (44) communicates with the suction pipe (53). The internal heat exchanger (44) functions as an evaporator through which the refrigerant absorbs heat from the air.

The refrigerant circuit (50) includes a bypass pipe (57). The inflow end of the bypass pipe (57) communicates with the discharge pipe (52), and the outflow end of the bypass pipe (57) communicates with the liquid pipe (55). The bypass pipe (57) sends the refrigerant discharged from the compressor (40) to the internal heat exchanger (44) by allowing the refrigerant to bypass the external heat exchanger (41).

The refrigerant circuit (50) is provided with a first valve (58) and a second valve (59). The first valve (58) is provided between the discharge side of the compressor (40) and the gas end of the external heat exchanger (41) and downstream of the connection of the bypass pipe (57). The second valve (59) is provided in the bypass pipe (57). For example, the first valve (58) and the second valve (59) are electromagnetic on-off valves. The first valve (58) and the second valve (59) may be flow rate control valves of which the opening degree is adjustable.

### [Inspection Hole, Blocking Plate, and Detector]

As shown in FIG. 1, the shipping container (10) is provided with the inspection hole (25), the blocking plate (80), and a detector (19).

The inspection hole (25) is an aperture through which maintenance of the cooling unit (20a) is conducted. In this example, the inspection hole (25) is an aperture from which the internal blower (45) is exposed. When the inspection hole (25) is opened, an operator can conduct maintenance of the internal blower (45) through the inspection hole (25).

The blocking plate (80) opens and closes the inspection hole (25). In this example, the blocking plate (80) is attached to the inspection hole (25) to cover the inspection hole (25), and is screwed to a wall portion of the shipping container (10) (specifically, a front wall portion of the casing (21) of the refrigeration apparatus (20)). Accordingly, the inspection hole (25) is closed. When the blocking plate (80) is unscrewed and detached from the inspection hole (25), the inspection hole (25) is opened.

The detector (19) detects whether the blocking plate (80) opens or closes the inspection hole (25). The detector (19) can employ a known opening/closing detection technique. For example, the detector (19) may be a magnetic opening/closing sensor.

In the container system (1) of the first embodiment, the inspection hole (25) is an aperture (17) that is subject to the unusual opening monitoring process described later. The blocking plate (80) is the opening/closing portion (18) that opens and closes the aperture (17). The detector (19) detects whether the opening/closing portion (18) opens or closes the aperture (17).

### [Various Sensors]

The shipping container (10) is provided with various sensors that detect physical quantities of various portions of the shipping container (10). Examples of those sensors include a temperature sensor, a pressure sensor, and the like. Examples of the physical quantities detected by those sensors include the pressure and temperature of the high-pressure side (a high-pressure refrigerant) of the refrigerant circuit (50); the pressure and temperature of the low-pressure side (a low-pressure refrigerant) of the refrigerant circuit (50); the temperature of the external air sucked into the external heat exchanger (41); the temperature of the external air blown out of the external heat exchanger (41); the temperature of the inside air sucked into the internal heat exchanger (44); the temperature of the inside air blown out of the internal heat exchanger (44); and the like.

As shown in FIG. 3, in this example, the shipping container (10) is provided with a suction temperature sensor (61) and a blowout temperature sensor (62). The suction temperature sensor (61) is provided at the inflow port (32) and detects the temperature of the inside air sucked into the internal heat exchanger (44). The blowout temperature sensor (62) is provided at the outflow port (33) and detects the temperature of the inside air blown out of the internal heat exchanger (44).

### [Electric Component Box]

As shown in FIG. 1, the casing (21) is provided with an electric component box (70). The electric component box (70) houses electric components such as a control board, a power supply circuit board, a power source terminal, and other electronic devices. The electric component box (70) is provided in a middle part of the casing (21) in the top-bottom direction.

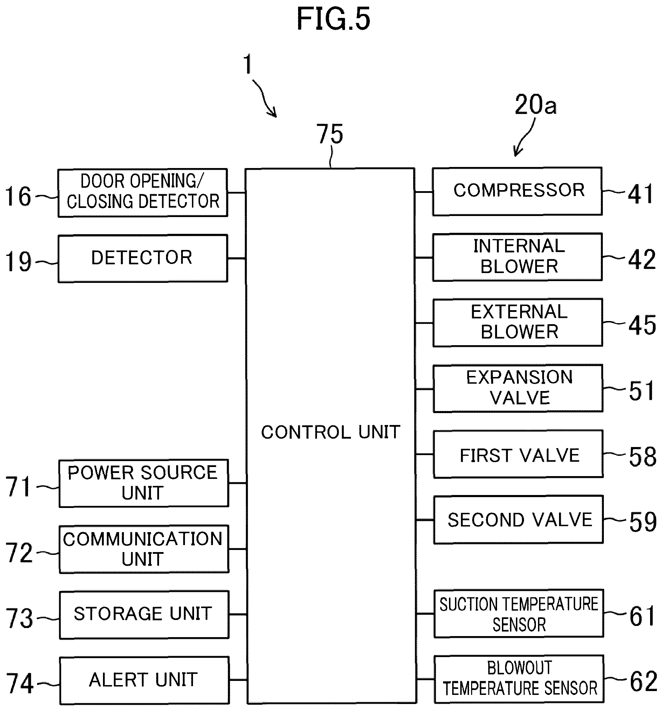

In addition to the above-described shipping container (10), the container system (1) includes a power source unit (71), a communication unit (72), a storage unit (73), an alert unit (74), and a control unit (75) as shown in FIG. 5. For example, the power source unit (71), the communication unit (72), the storage unit (73), the alert unit (74), and the control unit (75) are housed in the electric component box (70).

The power source unit (71) is connected with a power source, and the power source supplies the power source unit (71) with power. The power source is provided outside the shipping container (10). For example, the power source is a power source facility provided in a ship that transports the shipping container (10). The power source unit (71) supplies the power supplied from the power source to each part of the shipping container (10). For example, the power source unit (71) includes a power conversion unit that converts the power supplied from the power source into an intended power, and a power control unit that controls the power conversion unit. By monitoring this power source unit (71), it is possible to check whether power is supplied from the power source to the cooling unit (20a). The power source unit (71) may be configured to send the control unit (75) the information showing whether power is supplied from the power source to the cooling unit (20a).

The communication unit (72) transmits and receives several types of information and data. The communication unit (72) is a communication interface provided to conduct communication between a device outside the container system (1) and the control unit (75). For example, the communication unit (72) includes a modem. Examples of the device outside the container system (1) include a portable communication terminal such as a smartphone, a tablet, and the like, and a stationary communication terminal such as a server device.

The storage unit (73) stores several types of information and data. In this example, the storage unit (73) stores the information used to control the container system (1) (for example, set values such as thresholds); the information obtained by various sensors (for example, measured values); the information and data input from the outside of the container system (1); and the like. For example, the storage unit (73) is a hard disk drive (HDD), a random access memory (RAM), a solid state drive (SSD), or the like.

The alert unit (74) provides several types of information in response to the control conducted by the control unit (75). Examples of the alert unit (74) include a display that shows an image presenting the information that should be reported; a speaker that emits a sound presenting the information that should be reported; a lamp that emits alert light corresponding to the information that should be reported; a buzzer that emits an alert sound corresponding to the information that should be reported; and the like.

The control unit (75) conducts various kinds of processes. Specifically, the control unit (75) obtains the information and data from each component of the container system (1), and conducts various kinds of processes based on the obtained information and data. The processes by the control unit (75) will be described in detail later.

For example, the control unit (75) includes a processor, a memory, an input/output interface, and the like. The memory is electrically connected with the processor, and stores the programs and data for operating the processor. The processor executes the programs, whereby the control unit (75) can implement various functions. The control unit (75) includes components to implement control (for example, an electric circuit, an electronic circuit, and the like).

### [Unusual Opening]

Next, unusual opening of the aperture (17) will be described. The unusual opening is opening different from an originally intended opening. Examples of the unusual opening include improper opening different from an originally intended opening, and an unintentional opening conducted by accident. Such unusual opening is often conducted while the operating state of the cooling unit (20a) is not taken into consideration.

Usual opening of the inspection hole (25) is often conducted while whether the cooling unit (20a) is unusual is taken into consideration. For example, if the cooling unit (20a) is unusual, the inspection hole (25) is opened for maintenance (or inspection) of the cooling unit (20a). In contrast, unusual opening of the inspection hole (25) is often conducted while whether the cooling unit (20a) is unusual is not taken into consideration.

### [Processes by Control Unit]

Next, the processes by the control unit (75) will be described. In this example, the control unit (75) conducts an operation control process, a state monitoring process, a power supply monitoring process, an unusual opening monitoring process, and the like. For example, the state monitoring process and the power supply monitoring process are repeated (for example, periodically).

### [Operation Control Process]

In the operation control process, the control unit (75) controls operation of the cooling unit (20a). Specifically, the control unit (75) controls the cooling unit (20a) so that the temperature of air in the internal space (12) comes to a set temperature (a predetermined target temperature). For example, the control unit (75) controls the start and stop and the number of revolutions of the compressor (40), the start and stop and the number of revolutions of the external blower (42), the start and stop and the number of revolutions of the internal blower (45), the opening degree of the expansion valve (51), the opening and closing of the first valve (58) and the second valve (59), and the like.

### [State Monitoring Process]

In the state monitoring process, the control unit (75) monitors the state of each part of the cooling unit (20a). The control unit (75) determines whether each part of the cooling unit (20a) is unusual. For example, if the state of the internal blower (45) meets a predetermined unusual condition, the control unit (75) determines that the internal blower (45) is unusual. It is possible to employ a known technique for determining whether components are unusual in order to determine whether each part of the cooling unit (20a), such as the internal blower (45), is unusual.

Examples of the unusual circumstances of the internal blower (45) include breakage of the fan of the internal blower (45) and lock of the fan motor of the internal blower (45) (stop of rotation due to failure or the like). Examples of the unusual circumstances of each part of the cooling unit (20a) include breakage, failure, deterioration, and malfunction.

The control unit (75) stores the information in the storage unit (73), where "the determination result about whether each part of the cooling unit (20a) is unusual" obtained in the state monitoring process is linked with the time (or the date and time; the same applies to the following). For example, the control unit (75) stores the information in the storage unit (73), "the determination result showing that a component (for example, the internal blower (45)) of the cooling unit (20a) is unusual" is linked with "the time when the determination result was obtained."

### [Power Supply Monitoring Process]

In the power supply monitoring process, the control unit (75) monitors the state of the power source unit (71). Then, the control unit (75) determines whether power is supplied from the power source to the cooling unit (20a) via the power source unit (71). For example, if the power (voltage) supplied from the power source unit (71) to the cooling unit (20a) exceeds a threshold, the control unit (75) determines that power is supplied from the power source to the cooling unit (20a) via the power source unit (71).

The control unit (75) stores the information in the storage unit (73), "the determination result about whether power is supplied from the power source to the cooling unit (20a)" obtained in the power supply monitoring process is linked with the time. For example, the control unit (75) stores the information in the storage unit (73), where this information contains "the determination result showing that power is being (or not being) supplied from the power source to the cooling unit (20a)" and "the time when the determination result was obtained."

### [Unusual Opening Monitoring Process]

In the unusual opening monitoring process, if opening of the aperture (17) is detected, the control unit (75) outputs the information for determining whether unusual opening of the aperture (17) is present based on the information about the operating state of the cooling unit (20a) at the time the aperture (17) is opened. The information about the operating state of the cooling unit (20a) is hereinafter referred to as "the first information," and the information for determining whether unusual opening of the aperture (17) is present is hereinafter referred to as "the second information."

In this example, the aperture (17) is the inspection hole (25). The first information includes the information showing whether the cooling unit (20a) is unusual. The cooling unit (20a) being unusual means the internal blower (45) being unusual. The control unit (75) outputs the information for determining whether unusual opening of the inspection hole (25) is present based on whether the internal blower (45) is unusual when the inspection hole (25) is opened. The information for determining whether unusual opening of the inspection hole (25) is present is an example of the second information.

In this example, the control unit (75) detects opening of the inspection hole (25) based on the detection result obtained by the detector (19). Further, if the opening of the aperture (17) is unusual opening, the control unit (75) reports that the opening of the aperture (17) is unusual opening.

### [Flow of Unusual Opening Monitoring Process]

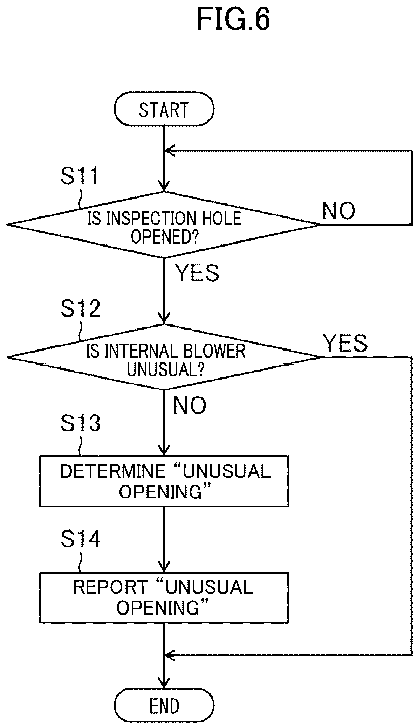

Next, the unusual opening monitoring process of the first embodiment will be described with reference to FIG. 6. The control unit (75) repeats the following process.

### <Step (S11)>

The control unit (75) determines whether the inspection hole (25) is opened. If the inspection hole (25) is opened, the process of step (S12) is conducted. In this example, the control unit (75) detects opening of the inspection hole (25) based on the detection result obtained by the detector (19).

### <Step (S12)>

If opening of the inspection hole (25) is detected in step (S11), the control unit (75) determines whether the internal blower (45) is unusual. If the internal blower (45) is not unusual when the inspection hole (25) is opened, the process of step (S13) is conducted; otherwise, the process is ended.

In this example, the control unit (75) detects whether the internal blower (45) is unusual based on "the determination result about whether the internal blower (45) is unusual" obtained by the state monitoring process. Specifically, if the determination result obtained by the state monitoring process shows that "the internal blower (45) is unusual," the control unit (75) determines that the internal blower (45) is unusual; otherwise, the control unit (75) determines that the internal blower (45) is not unusual.

For example, from the information stored in the storage unit (73) (the information in which "the determination result showing that a component (for example, the internal blower (45)) of the cooling unit (20a) is unusual" is linked with "the time when the determination result was obtained"), the control unit (75) obtains the information that corresponds to the time immediately before the time when the opening of the inspection hole (25) is detected in step (S11). Then, based on the determination result shown by that information, the control unit (75) determines whether the internal blower (45) is unusual. Alternatively, if opening of the inspection hole (25) is detected in step (S11), the control unit (75) conducts the state monitoring process, and determines whether the internal blower (45) is unusual based on the determination result obtained by the state monitoring process.

### <Step (S13)>

If the internal blower (45) is not unusual when the inspection hole (25) is opened, the control unit (75) determines that the opening of the inspection hole (25) detected in step (S11) is "unusual opening."

### <Step (S14)>

Next, the control unit (75) reports that the opening of the inspection hole (25) detected in step (S11) is "unusual opening." In this example, the control unit (75) controls the alert unit (74) so that the alert unit (74) reports that the opening of the inspection hole (25) is unusual opening. In other words, the control unit (75) uses the alert unit (74) to output the information showing that the opening of the inspection hole (25) is unusual opening. The information showing that the opening of the inspection hole (25) is unusual opening is an example of the second information for determining whether unusual opening of the inspection hole (25) is present.

### [Advantages of First Embodiment]

As described above, the container system (1) of the first embodiment includes the shipping container (10) including the container body (11) and the refrigeration apparatus (20) connected to the container body (11), and the control unit (75). The refrigeration apparatus (20) includes the cooling unit (20a) configured to cool the inside of the container body (11). The shipping container (10) is provided with the aperture (17) and the opening/closing portion (18) configured to open and close the aperture (17). The control unit (75) outputs the second information for determining whether unusual opening of the aperture (17) is present based on the first information about the operating state of the cooling unit (20a) at the time the aperture (17) is opened.

As described above, usual opening of the aperture (17) is often conducted while the operating state of the cooling unit (20a) is taken into consideration. In contrast, unusual opening (for example, improper opening) of the aperture (17) is often conducted while the operating state of the cooling unit (20a) is not taken into consideration. Thus, it is possible to more accurately determine unusual opening of the aperture (17) by outputting the information for determining whether unusual opening of the aperture (17) is present based on the operating state of the cooling unit (20a) at the time the aperture (17) is opened.

In the container system (1) of the first embodiment, the aperture (17) is the inspection hole (25) provided for maintenance of the cooling unit (20a).

According to the above configuration, it is possible to determine whether unusual opening of the inspection hole (25) is present. Thus, it is possible to more accurately determine unusual opening of the inspection hole (25) by outputting the information for determining whether unusual opening of the inspection hole (25) is present based on the operating state of the cooling unit (20a) at the time the inspection hole (25) is opened.

In the container system (1) of the first embodiment, the first information includes the information showing whether the cooling unit (20a) is unusual.

As described above, usual opening of the inspection hole (25) is often conducted while whether the cooling unit (20a) is unusual is taken into consideration. In contrast, unusual opening of the inspection hole (25) is often conducted while whether the cooling unit (20a) is unusual is not taken into consideration. Thus, it is possible to more accurately determine unusual opening of the inspection hole (25) by outputting the information for determining whether unusual opening of the inspection hole (25) is present based on whether the cooling unit (20a) is unusual when the inspection hole (25) is opened.

In the container system (1) of the first embodiment, the cooling unit (20a) includes the internal blower (45) configured to circulate the air between the inside of the container body (11) and the refrigeration apparatus (20). The inspection hole (25) is an aperture from which the internal blower (45) is exposed. The cooling unit (20a) being unusual means the internal blower (45) being unusual.

According to the above configuration, it is possible to accurately determine whether unusual opening of the inspection hole (25) is present by outputting the information for determining whether unusual opening of the inspection hole (25) is present based on whether the internal blower (45) is unusual when the inspection hole (25) is opened.

The container system (1) of the first embodiment includes the detector (19) configured to detect the opening/closing portion (18) opening or closing the inspection hole (25). The control unit (75) detects opening of the inspection hole (25) based on the detection result obtained by the detector (19). According to the above configuration, it is possible to appropriately detect opening of the inspection hole (25).

In the container system of the first embodiment, if the opening of the aperture (17) (the inspection hole (25)) is unusual opening, the control unit (75) reports that the opening of the aperture (17) is unusual opening. According to the above configuration, it is possible to report unusual opening of the aperture (17).

### (First Variation of First Embodiment)

The container system (1) of the first variation of the first embodiment is different in the unusual opening monitoring process from the container system (1) of the first embodiment. The other configurations and processes of the container system (1) of the first variation of the first embodiment are the same as the configurations and processes of the container system (1) of the first embodiment.

According to the first variation of the first embodiment, the first information includes the information showing whether power is supplied from the power source to the cooling unit (20a).

### [Unusual Opening]

Usual opening of the inspection hole (25) is often conducted while whether power is supplied from the power source to the cooling unit (20a) is taken into consideration. For example, when maintenance (or inspection) of the cooling unit (20a) is conducted, the inspection hole (25) is opened while power is supplied from the power source to the cooling unit (20a) in order to drive the cooling unit (20a). In contrast, unusual opening of the inspection hole (25) is often conducted while whether power is supplied from the power source to the cooling unit (20a) is not taken into consideration.

### [Unusual Opening Monitoring Process]

In the unusual opening monitoring process of the first variation of the first embodiment, the control unit (75) outputs the information for determining whether unusual opening of the inspection hole (25) is present based on "whether power is supplied from the power source to the cooling unit (20a)" when the inspection hole (25) is opened.

### [Flow of Unusual Opening Monitoring Process]

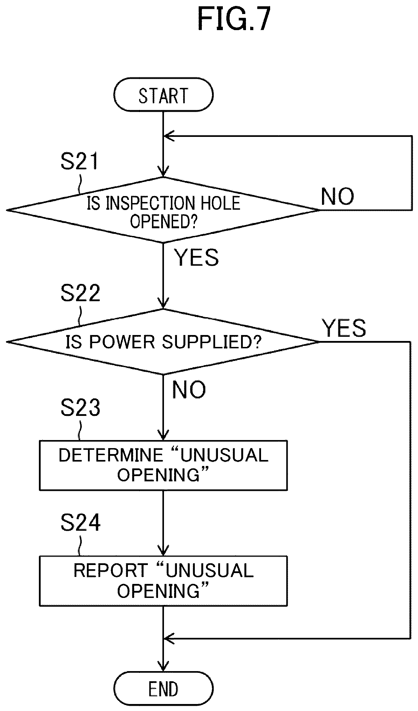

Next, the flow of the unusual opening monitoring process of the first variation of the first embodiment will be described with reference to FIG. 7. The control unit (75) repeats the following process. Steps (S21, S23, S24) of the unusual opening monitoring process of FIG. 7 are the same as steps (S11, S13, S14) of FIG. 6, and thus their descriptions are omitted. In other words, the unusual opening monitoring process of FIG. 7 includes step (S22) instead of step (S12) of FIG. 6.

### <Step (S22)>

If opening of the inspection hole (25) is detected in step (S21), the control unit (75) determines whether power is supplied from the power source to the cooling unit (20a). If power is not supplied from the power source to the cooling unit (20a) when the inspection hole (25) is opened, the process of step (S23) is conducted; otherwise, the process is ended.

In this example, the control unit (75) determines whether power is supplied from the power source to the cooling unit (20a) based on "the determination result about whether power is supplied from the power source to the cooling unit (20a)" obtained by the power supply monitoring process. Specifically, if the determination result obtained by the power supply monitoring process shows that "power is supplied from the power source to the cooling unit (20a)," the control unit (75) determines that power is supplied from the power source to the cooling unit (20a); otherwise, the control unit (75) determines that power is not supplied from the power source to the cooling unit (20a).

For example, from the information stored in the storage unit (73) (the information in which "the determination result showing that power is supplied (or not supplied) from the power source to the cooling unit (20a)" is linked with "the time when the determination result was obtained"), the control unit (75) obtains the information that corresponds to the time immediately before the time when the opening of the inspection hole (25) is detected in step (S21). Then, based on the determination result shown by that information, the control unit (75) determines whether power is supplied from the power source to the cooling unit (20a). Alternatively, if opening of the inspection hole (25) is detected in step (S21), the control unit (75) conducts the power supply monitoring process, and determines whether power is supplied from the power source to the cooling unit (20a) based on the determination result obtained by the power supply monitoring process.

### [Advantages of First Variation of First Embodiment]

The container system (1) of the first variation of the first embodiment can provide the same advantages as those of the container system (1) of the first embodiment.

In the container system (1) of the first variation of the first embodiment, the first information about the operating state of the cooling unit (20a) includes the information showing whether power is supplied from the power source to the cooling unit (20a).

As described above, usual opening of the inspection hole (25) is often conducted while whether power is supplied from the power source to the cooling unit (20a) is taken into consideration. In contrast, unusual opening of the inspection hole (25) is often conducted while whether power is supplied from the power source to the cooling unit (20a) is not taken into consideration. Thus, it is possible to more accurately determine unusual opening of the inspection hole (25) by outputting the information for determining whether unusual opening of the inspection hole (25) is present based on whether power is supplied from the power source to the cooling unit (20a) when the inspection hole (25) is opened.

### (Second Variation of First Embodiment)

The container system (1) of the second variation of the first embodiment is different in the unusual opening monitoring process from the container system (1) of the first embodiment. The other configurations and processes of the container system (1) of the second variation of the first embodiment are the same as the configurations and processes of the container system (1) of the first embodiment.

### [Unusual Opening]

Usual opening of the inspection hole (25) is often conducted while whether maintenance of the cooling unit (20a) needs to be conducted is taken into consideration. For example, if maintenance of the cooling unit (20a) is required, the inspection hole (25) is opened. In contrast, unusual opening of the inspection hole (25) is often conducted while whether maintenance of the cooling unit (20a) needs to be conducted is not taken into consideration.

### [Unusual Opening Monitoring Process]

In the unusual opening monitoring process of the second variation of the first embodiment, the control unit (75) outputs the second information based on the first information at the time the aperture (17) is opened (the information about the operating state of the cooling unit (20a)) and "the information for checking whether maintenance of the cooling unit (20a) needs to be conducted" when the aperture (17) is opened.

In the second variation of the first embodiment, the information for checking whether maintenance of the cooling unit (20a) needs to be conducted includes the information showing the position of the shipping container (10).

### [Flow of Unusual Opening Monitoring Process]

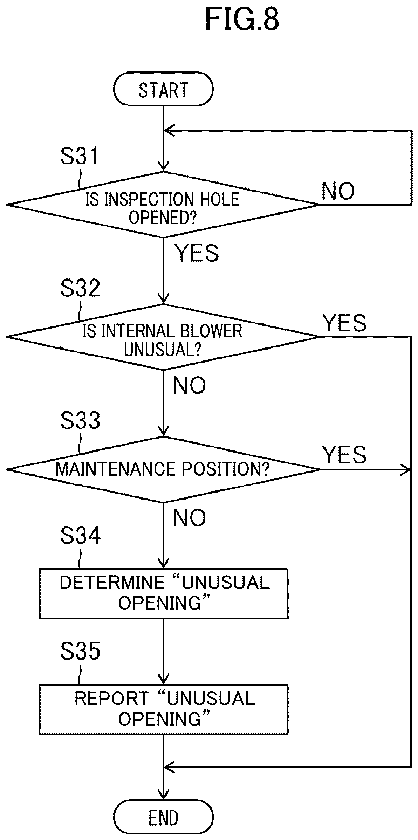

Next, the flow of the unusual opening monitoring process of the second variation of the first embodiment will be described with reference to FIG. 8. The control unit (75) repeats the following process. Steps (S31, S32, S34, S35) of the unusual opening monitoring process of FIG. 8 are the same as steps (S11, S12, S13, S14) of FIG. 6, and thus their descriptions are omitted. In other words, the unusual opening monitoring process of FIG. 8 includes steps (S11 to S14) of FIG. 6 and also includes step (S33).

### <Step (S33)>

If it is determined in step (S32) that the internal blower (45) is not unusual, the control unit (75) determines whether the position of the shipping container (10) is "the position at which maintenance of the cooling unit (20a) is conducted (the maintenance position)." If the position of the shipping container (10) is not the maintenance position when the inspection hole (25) is opened, the process of step (S34) is conducted; otherwise, the process is ended.

In this example, the control unit (75) obtains the positional information showing the position (latitude and longitude) of the shipping container (10) from a global positioning system (GPS). The storage unit (73) stores in advance the maintenance position information showing the representative position (latitude and longitude) of the maintenance position. Then, if the position of the shipping container (10) is included in "a predetermined area with respect to the representative position (for example, the center) of the maintenance position shown by the maintenance position information, the control unit (75) determines that the position of the shipping container (10) is the maintenance position; otherwise, the control unit (75) determines that the position of the shipping container (10) is not the maintenance position.

### [Advantages of Second Variation of First Embodiment]

The container system (1) of the second variation of the first embodiment can provide the same advantages as those of the container system (1) of the first embodiment.

In the container system (1) of the second variation of the first embodiment, the control unit (75) outputs the second information for determining whether unusual opening of the aperture (17) is present based on the first information at the time the aperture (17) (the inspection hole (25)) is opened and the information for checking whether maintenance of the cooling unit (20a) needs to be conducted when the aperture (17) is opened.

As described above, usual opening of the inspection hole (25) is often conducted while whether maintenance of the cooling unit (20a) needs to be conducted is taken into consideration. In contrast, unusual opening of the inspection hole (25) is often conducted while whether maintenance of the cooling unit (20a) needs to be conducted is not taken into consideration. Thus, it is possible to more accurately determine unusual opening of the inspection hole (25) by outputting the information for determining whether unusual opening of the inspection hole (25) is present based on not only the operating state of the cooling unit (20a) at the time the inspection hole (25) is opened but also whether maintenance of the cooling unit (20a) needs to be conducted when inspection hole (25) is opened.

In the container system (1) of the second variation of the first embodiment, the information for checking whether maintenance of the cooling unit (20a) needs to be conducted includes the information showing the position of the shipping container (10). According to the above configuration, it is possible to check whether maintenance of the cooling unit (20a) needs to be conducted based on the information showing the position of the shipping container (10) (specifically, whether the position of the shipping container (10) is a position at which maintenance of the cooling unit (20a) is conducted).

### (Third Variation of First Embodiment)

The container system (1) of the third variation of the first embodiment is different in the information for checking whether maintenance of the cooling unit (20a) needs to be conducted from the container system (1) of the second variation of the first embodiment. The other configurations and processes of the container system (1) of the third variation of the first embodiment are the same as the configurations and processes of the container system (1) of the second variation of the first embodiment.

In the third variation of the first embodiment, the information for checking whether maintenance of the cooling unit (20a) needs to be conducted includes the information showing the schedule for maintenance of the cooling unit (20a).

### [Flow of Unusual Opening Monitoring Process]

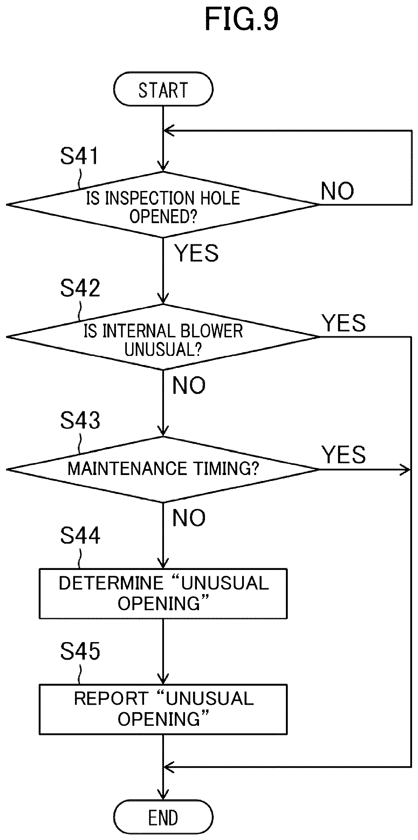

Next, the flow of the unusual opening monitoring process of the third variation of the first embodiment will be described with reference to FIG. 9. The control unit (75) repeats the following process. Steps (S41, S42, S44, S45) of the unusual opening monitoring process of FIG. 9 are the same as steps (S31, S32, S34, S35) of FIG. 8, and thus their descriptions are omitted. In other words, the unusual opening monitoring process of FIG. 9 includes step (S43) instead of step (S33) of FIG. 8.

### <Step (S43)>

If it is determined in step (S42) that the internal blower (45) is not unusual, the control unit (75) determines whether it is time to conduct maintenance of the cooling unit (20a) (the maintenance timing). If the date and time when the inspection hole (25) is opened is not within the maintenance timing, the process of step (S44) is conducted; otherwise, the process is ended.

In this example, the control unit (75) obtains the date and time when the inspection hole (25) is opened. The storage unit (73) stores in advance the information showing the schedule for maintenance of the cooling unit (20a). This information shows the period and time zone of the maintenance timing (during which period and at which time zone maintenance of the cooling unit (20a) should be conducted). If the date and time when the inspection hole (25) is opened is included in the period and time zone of the maintenance timing, the control unit (75) determines that the date and time when the inspection hole (25) is opened is within the maintenance timing; otherwise, the control unit (75) determines that the date and time when the inspection hole (25) is opened is not within the maintenance timing.

### [Advantages of Third Variation of First Embodiment]

The container system (1) of the third variation of the first embodiment can provide the same advantages as those of the container system (1) of the second variation of the first embodiment.

In the container system (1) of the third variation of the first embodiment, the information for checking whether maintenance of the cooling unit (20a) needs to be conducted includes the information showing the schedule for maintenance of the cooling unit (20a). According to the above configuration, it is possible to check whether maintenance of the cooling unit (20a) needs to be conducted based on the schedule for maintenance of the cooling unit (20a).

### (Fourth Variation of First Embodiment)

The container system (1) of the fourth variation of the first embodiment is different in the configuration of the opening/closing portion (18) and the process for detecting opening of the aperture (17) (the opening detection process) from the container system (1) of the first embodiment. The other configurations and processes of the container system (1) of the fourth variation of the first embodiment are the same as the configurations and processes of the container system (1) of the first embodiment.

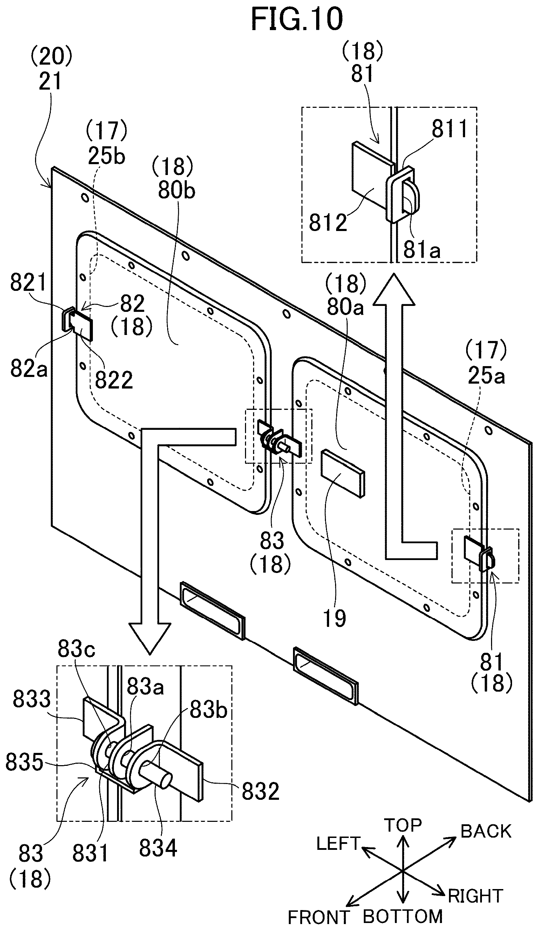

FIG. 10 shows an exemplary configuration of the opening/closing portion (18) of the fourth variation of the first embodiment. As shown in FIG. 10, the inspection hole (25) includes a first inspection hole (25a) and a second inspection hole (25b) arranged in a predetermined direction. In this example, the predetermined direction is the right-left direction. The first inspection hole (25a) and the second inspection hole (25b) are spaced apart from each other in the right-left direction.

In the fourth variation of the first embodiment, the opening/closing portion (18) includes a first blocking plate (80a), a second blocking plate (80b), a first locking part (81), a second locking part (82), and a central locking part (83). The first blocking plate (80a) can block the first inspection hole (25a). The second blocking plate (80b) can block the second inspection hole (25b).

The first locking part (81) is provided on part of the first inspection hole (25a) that is away from the second inspection hole (25b) (in this example, the right side of the first inspection hole (25a)) in the predetermined direction, and can lock the first blocking plate (80a). The second locking part (82) is provided on part of the second inspection hole (25b) that is away from the first inspection hole (25a) (in this example, the left side of the second inspection hole (25b)) in the predetermined direction, and can lock the second blocking plate (80b).

The central locking part (83) is provided between the first inspection hole (25a) and the second inspection hole (25b) in the predetermined direction, and can lock the first blocking plate (80a) and the second blocking plate (80b).

The first blocking plate (80a) and the second blocking plate (80b) are locked by the first locking part (81), the second locking part (82), and the central locking part (83), while blocking the first inspection hole (25a) and the second inspection hole (25b), respectively. By being unlocked by the first locking part (81), the second locking part (82), and the central locking part (83), the first blocking plate (80a) and the second blocking plate (80b) can open the first inspection hole (25a) and the second inspection hole (25b).

### [Details of First Locking Part]

The first locking part (81) includes a first protruding part (811) provided on the wall of the shipping container (10) and a first inserting part (812) provided on the first blocking plate (80a).

The first protruding part (811) protrudes from the wall of the shipping container (10). The first protruding part (811) is provided with a first locking hole (81a). In this example, the first protruding part (811) is provided on the front surface of the casing (21) of the refrigeration apparatus (20); is located to the right of the first inspection hole (25a); and protrudes toward the front. The first locking hole (81a) penetrates the first protruding part (811) in the right-left direction. The cross section of the first locking hole (81a) that is orthogonal to the direction in which the first locking hole (81a) penetrates is shaped in an elongated rectangle that extends in the top-bottom direction.

The first inserting part (812) protrudes from the edge of the first blocking plate (80a) which blocks the first inspection hole (25a), where this edge is away from the second inspection hole (25b) in the predetermined direction. The first inserting part (812) can be inserted into the first locking hole (81a). In this example, the first inserting part (812) is provided at the right edge of the first blocking plate (80a) and protrudes toward the right. The cross section of the first inserting part (812) that is orthogonal to the direction in which the first inserting part (812) protrudes is shaped in an elongated rectangle that extends in the top-bottom direction.

By the first inserting part (812) being inserted into the first locking hole (81a), the first locking part (81) locks the first blocking plate (80a). By the first inserting part (812) being removed from the first locking hole (81a), the first locking part (81) unlocks the first blocking plate (80a).

### [Details of Second Locking Part]

The second locking part (82) includes a second protruding part (821) provided on the wall of the shipping container (10) and a second inserting part (822) provided on the second blocking plate (80b).

The second protruding part (821) protrudes from the wall of the shipping container (10). The second protruding part (821) is provided with a second locking hole (82a). In this example, the second protruding part (821) is provided on the front surface of the casing (21) of the refrigeration apparatus (20); is located to the left of the second inspection hole (25b); and protrudes toward the front. The second locking hole (82a) penetrates the second protruding part (821) in the right-left direction. The cross section of the second locking hole (82a) that is orthogonal to the direction in which the second locking hole (82a) penetrates is shaped in an elongated rectangle that extends in the top-bottom direction.

The second inserting part (822) protrudes from the edge of the second blocking plate (80b) which blocks the second inspection hole (25b), where this edge is away from the first inspection hole (25a) in the predetermined direction. The second inserting part (822) can be inserted into the second locking hole (82a). In this example, the second inserting part (822) is provided at the left edge of the second blocking plate (80b), and protrudes toward the left. The cross section of the second inserting part (822) that is orthogonal to the direction in which the second inserting part (822) protrudes is shaped in an elongated rectangle that extends in the top-bottom direction.

By the second inserting part (822) being inserted into the second locking hole (82a), the second locking part (82) locks the second blocking plate (80b). By the second inserting part (822) being removed from the second locking hole (82a), the second locking part (82) unlocks the second blocking plate (80b).

### [Details of Central Locking Part]

The central locking part (83) includes a third protruding part (831) provided on the wall of the shipping container (10), a fourth protruding part (832) provided on the first blocking plate (80a), a fifth protruding part (833) provided on the second blocking plate (80b), and a locking bar (834).

The third protruding part (831) protrudes from the wall of the shipping container (10). The third protruding part (831) is provided with a third locking hole (83a). In this example, the third protruding part (831) is provided on the front surface of the casing (21) of the refrigeration apparatus (20); is located between the first inspection hole (25a) and the second inspection hole (25b); and protrudes toward the front. The third locking hole (83a) penetrates the third protruding part (831) in the right-left direction. The cross section of the third locking hole (83a) that is orthogonal to the direction in which the third locking hole (83a) penetrates is shaped in a circle.

The fourth protruding part (832) protrudes from the edge of the first blocking plate (80a) which blocks the first inspection hole (25a), where this edge is close to the second inspection hole (25b) in the predetermined direction. The fourth protruding part (832) is provided with a fourth locking hole (83b). In this example, the fourth protruding part (832) is provided at the left edge of the first blocking plate (80a), and protrudes toward the front. The fourth locking hole (83b) penetrates the fourth protruding part (832) in the right-left direction. The cross section of the fourth locking hole (83b) that is orthogonal to the direction in which the fourth locking hole (83b) penetrates is shaped in a circle.

The fifth protruding part (833) protrudes from the edge of the second blocking plate (80b) which blocks the second inspection hole (25b), where this edge is close to the first inspection hole (25a) in the predetermined direction. The fifth protruding part (833) is provided with a fifth locking hole (83c). In this example, the fifth protruding part (833) is provided at the right edge of the second blocking plate (80b), and protrudes toward the front. The fifth locking hole (83c) penetrates the fifth protruding part (833) in the right-left direction. The cross section of the fifth locking hole (83c) that is orthogonal to the direction in which the fifth locking hole (83c) penetrates is shaped in a circle.

The locking bar (834) can be inserted into the third locking hole (83a), the fourth locking hole (83b), and the fifth locking hole (83c). In this example, the cross section of the locking bar (834) that is orthogonal to the direction in which the locking bar (834) extends is shaped in a circle. One end of the locking bar (834) is connected with a locking piece (835) formed in an L-shape.

By the locking bar (834) being inserted into the third locking hole (83a), the fourth locking hole (83b), and the fifth locking hole (83c), the central locking part (83) locks the first blocking plate (80a) and the second blocking plate (80b). By the locking bar (834) being removed from the third locking hole (83a), the fourth locking hole (83b), and the fifth locking hole (83c), the central locking part (83) unlocks the first blocking plate (80a) and the second blocking plate (80b).

For example, the first protruding part (811), the second protruding part (821), and the third protruding part (831) are made of an aluminum material, and are welded to the wall of the shipping container (10). The first blocking plate (80a), the first inserting part (812), and the fourth protruding part (832) are made of an aluminum material, and the first inserting part (812) and the fourth protruding part (832) are welded to the first blocking plate (80a). The second blocking plate (80b), the second inserting part (822), and the fifth protruding part (833) are made of an aluminum material, and the second inserting part (822) and the fifth protruding part (833) are welded to the second blocking plate (80b).

### [Opening Detection Process]

In the fourth variation of the first embodiment, when the central locking part (83) unlocks the first blocking plate (80a) and the second blocking plate (80b), the detector (19) detects opening of the inspection hole (25). Specifically, when the locking bar (834) is removed from the central locking part (83), the detector (19) detects opening of the inspection hole (25). In this example, the state in which the central locking part (83) unlocks the first blocking plate (80a) and the second blocking plate (80b) (the state in which the locking bar (834) is removed) is regarded as "the state in which the inspection hole (25) is opened."

### [Advantages of Fourth Variation of First Embodiment]

The container system (1) of the fourth variation of the first embodiment can provide the same advantages as those of the container system (1) of the first embodiment.

In the container system (1) of the fourth variation of the first embodiment, the inspection hole (25) includes the first inspection hole (25a) and the second inspection hole (25b) arranged in the predetermined direction. The opening/closing portion (18) includes the first blocking plate (80a), the second blocking plate (80b), the first locking part (81), the second locking part (82), and the central locking part (83) capable of locking the first blocking plate (80a) and the second blocking plate (80b). When the central locking part (83) unlocks the first blocking plate (80a) and the second blocking plate (80b), the detector (19) detects opening of the inspection hole (25).

According to the above configuration, it is possible to detect opening of both the first inspection hole (25a) and the second inspection hole (25b) by monitoring the central locking part (83).

In the container system (1) of the fourth variation of the first embodiment, the central locking part (83) includes the third protruding part (831) provided with the third locking hole (83a), the fourth protruding part (832) provided with the fourth locking hole (83b), the fifth protruding part (833) provided with the fifth locking hole (83c), and the locking bar (834). By the locking bar (834) being inserted into the third locking hole (83a), the fourth locking hole (83b), and the fifth locking hole (83c), the central locking part (83) locks the first blocking plate (80a) and the second blocking plate (80b).

According to the above configuration, it is possible to detect opening of both the first inspection hole (25a) and the second inspection hole (25b) by monitoring the locking bar (834) of the central locking part (83).

### (Fifth Variation of First Embodiment)

The container system (1) of the fifth variation of the first embodiment is different in the configuration of the central locking part (83) from the container system (1) of the fourth variation of the first embodiment. The other configurations and processes of the container system (1) of the fifth variation of the first embodiment are the same as the configurations and processes of the container system (1) of the fourth variation of the first embodiment.

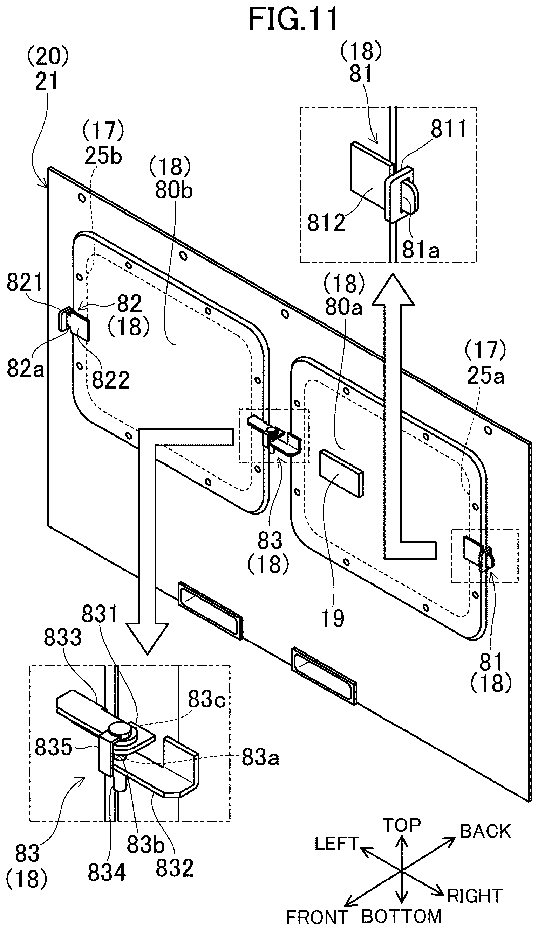

FIG. 11 shows an exemplary configuration of the opening/closing portion (18) of the fifth variation of the first embodiment. As shown in FIG. 11, the third locking hole (83a) penetrates the third protruding part (831) in the top-bottom direction. The fourth locking hole (83b) penetrates the fourth protruding part (832) in the top-bottom direction. The fifth locking hole (83c) penetrates the fifth protruding part (833) in the top-bottom direction. The other configurations of the opening/closing portion (18) of the fourth variation of the first embodiment are the same as those of the opening/closing portion (18) of the fourth variation of the first embodiment.

### [Advantages of Fifth Variation of First Embodiment]

The container system (1) of the fifth variation of the first embodiment can provide the same advantages as those of the container system (1) of the fourth variation of the first embodiment.

### (Sixth Variation of First Embodiment)

The container system (1) of the sixth variation of the first embodiment is different in the process for detecting opening of the aperture (17) (the opening detection process) from the container system (1) of the first embodiment. The other configuration and processes of the container system (1) of the sixth variation of the first embodiment are the same as the configuration and processes of the container system (1) of the first embodiment.

### [Illuminance in Shipping Container]

When the aperture (17) (the inspection hole (25) in this example) is opened or closed while surroundings of the shipping container (10) are brighter than the inside of the shipping container (10), the illuminance in the shipping container (10) changes. For example, when the aperture (17) is opened, the illuminance in the shipping container (10) increases. In contrast, when the aperture (17) is blocked, the illuminance in the shipping container (10) decreases.

### [Illuminance Sensor]

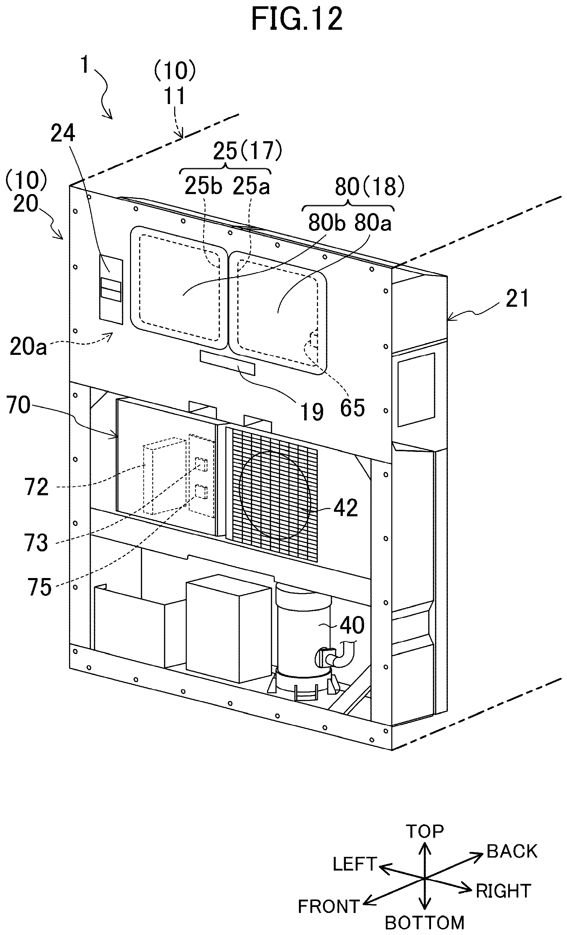

As shown in FIG. 12, the container system (1) of the sixth variation of the first embodiment includes an illuminance sensor (65). The illuminance sensor (65) detects the illuminance in the shipping container (10).

### [Opening Detection Process]

In the sixth variation of the first embodiment, the control unit (75) detects opening of the aperture (17) based on a change in the illuminance in the shipping container (10) detected by the illuminance sensor (65). Specifically, if the illuminance in the shipping container (10) detected by the illuminance sensor (65) increases and exceeds a predetermined threshold, the control unit (75) determines that the aperture (17) is opened. If the illuminance in the shipping container (10) detected by the illuminance sensor (65) decreases and fails to exceed a threshold, the control unit (75) determines that the aperture (17) is blocked.

### [Advantages of Sixth Variation of First Embodiment]

The container system (1) of the sixth variation of the first embodiment can provide the same advantages as those of the container system (1) of the first embodiment.

The container system (1) of the sixth variation of the first embodiment includes the illuminance sensor (65) configured to detect the illuminance in the shipping container (10). The control unit (75) detects opening of the aperture (17) (the inspection hole (25) in this example) based on a change in the illuminance in the shipping container (10) detected by the illuminance sensor (65).

As described above, when the aperture (17) is opened or closed while surroundings of the shipping container (10) is brighter than the inside of the shipping container (10), the illuminance in the shipping container (10) changes. Thus, it is possible to detect opening of the aperture (17) (the inspection hole (25) in this example) based on a change in the illuminance in the shipping container (10).

### (Seventh Variation of First Embodiment)

The container system (1) of the seventh variation of the first embodiment is different in the process for detecting opening of the aperture (17) from the container system (1) of the first embodiment. The other configuration and processes of the container system (1) of the seventh variation of the first embodiment are the same as the configuration and processes of the container system (1) of the first embodiment.

### [Temperature and Pressure in Shipping Container]

When the aperture (17) (the inspection hole (25) in this example) is opened or closed while the cooling unit (20a) is driving, the temperature and pressure in the shipping container (10) (specifically, the temperature and pressure of air in the internal space (12)) change. For example, when the cooling unit (20a) is driving, the temperature in the shipping container (10) increases if the aperture (17) is opened, and the temperature in the shipping container (10) decreases if the aperture (17) is blocked. When the cooling unit (20a) is driving, the pressure in the shipping container (10) increases if the aperture (17) is opened, and the pressure in the shipping container (10) decreases if the aperture (17) is blocked.

The change in the temperature or pressure in the shipping container (10) in response to the opening of the inspection hole (25) is different from the change in the temperature or pressure in the shipping container (10) in response to the opening of the gate (14). Specifically, the rate of increase in the temperature of inside air at the outflow port (33) (the rate of increase per unit time) is higher when the inspection hole (25) is opened than when the gate (14) is opened. The same applies to the rate of increase in the pressure of inside air at the outflow port (33).

In this example, the temperature of inside air at the outflow port (33) is detected by the blowout temperature sensor (62) provided at the outflow port (33). A blowout pressure sensor may be provided instead of the blowout temperature sensor (62) (or together with the blowout temperature sensor (62)). The blowout pressure sensor (not shown) is provided at the outflow port (33) to detect the pressure of inside air at the outflow port (33). The blowout temperature sensor (62) is an example of a temperature sensor that detects the temperature in the shipping container (10). The blowout pressure sensor is an example of a pressure sensor that detects the pressure in the shipping container (10).

### [Opening Detection Process]

In the seventh variation of the first embodiment, the control unit (75) detects opening of the aperture (17) (the inspection hole (25) in this example) based on a change in the temperature or pressure in the shipping container (10). **In** this example, if the temperature of the inside air detected by the blowout temperature sensor (62) increases and exceeds a predetermined temperature, and the rate of increase in the temperature of the inside air detected by the blowout temperature sensor (62) exceeds a predetermined rate, the control unit (75) determines that the inspection hole (25) is opened.

### [Advantages of Seventh Variation of First Embodiment]

The container system (1) of the seventh variation of the first embodiment can provide the same advantages as those of the container system (1) of the first embodiment.

In the container system (1) of the seventh variation of the first embodiment, the control unit (75) detects opening of the aperture (17) (the inspection hole (25) in this example) based on a change in the temperature or pressure in the shipping container (10).

As described above, when the aperture (17) (the inspection hole (25) in this example) is opened or closed while the cooling unit (20a) is driving, the temperature and pressure in the shipping container (10) (specifically, the temperature and pressure of air in the internal space (12)) change. Thus, it is possible to detect opening of the aperture (17) based on a change in the temperature or pressure in the shipping container (10).

### (Second Embodiment)

The container system (2) of the second embodiment is different in the aperture (17) subject to the unusual opening monitoring process and also different in the unusual opening monitoring process from the container system (1) of the first embodiment. The other configuration and processes of the container system (1) of the second embodiment are the same as the configuration and processes of the container system (1) of the first embodiment.

According to the second embodiment, the aperture (17) subject to the unusual opening monitoring process is the gate (14). The first information about the operating state of the cooling unit (20a) includes the information showing whether power is supplied from the power source to the cooling unit (20a).

### [Unusual Opening Monitoring Process]

In the unusual opening monitoring process of the second embodiment, the control unit (75) outputs the second information for determining whether unusual opening of the gate (14) is present based on "the information showing whether power is supplied from the power source to the cooling unit (20a)" when the aperture (17) is opened and "the information for checking whether contents need to be loaded into and unloaded from the shipping container (10)" when the aperture (17) is opened.

In the second embodiment, the information for checking whether contents need to be loaded into and unloaded from the shipping container (10) includes the information showing the position of the shipping container (10).

### [Flow of Unusual Opening Monitoring Process]

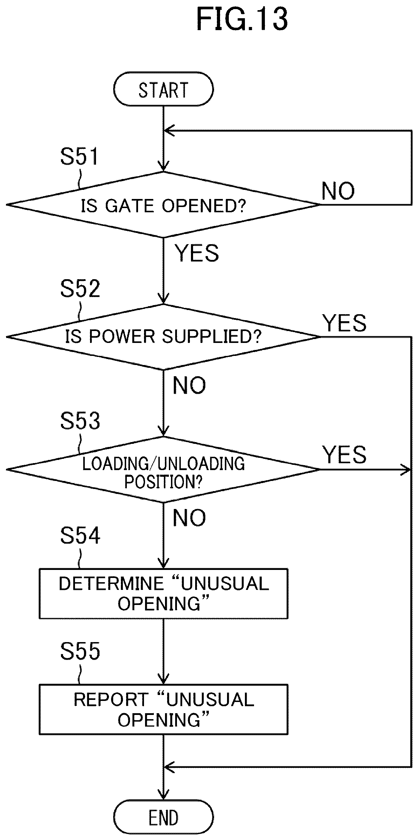

Next, the flow of the unusual opening monitoring process of the second embodiment will be described with reference to FIG. 13. The control unit (75) repeats the following process.

### <Step (S51)>

The control unit (75) determines whether the gate (14) is opened. If the gate (14) is opened, the process of step (S52) is conducted. In this example, the control unit (75) detects opening of the gate (14) based on the detection result obtained by the door opening/closing detector (16).

### <Step (S52)>

If opening of the gate (14) is detected in step (S51), the control unit (75) determines whether power is supplied from the power source to the cooling unit (20a). If power is not supplied from the power source to the cooling unit (20a) when the gate (14) is opened, the process of step (S53) is conducted; otherwise, the process is ended.

In this example, the control unit (75) determines whether power is supplied from the power source to the cooling unit (20a) based on "the determination result about whether power is supplied from the power source to the cooling unit (20a)" obtained by the power supply monitoring process. The process of step (S52) is the same as the process of step (S22) in FIG. 7, and corresponds to the process of step (S22) with "the inspection hole (25)" replaced with "the gate (14)."

### <Step (S53)>

If it is determined in step (S52) that "power is not supplied from the power source to the cooling unit (20a)," the control unit (75) determines whether the position of the shipping container (10) is "the position at which the contents are loaded and unloaded (the loading/unloading position)." If the position of the shipping container (10) is not the loading/unloading position when the gate (14) is opened, the process of step (S54) is conducted; otherwise, the process is ended.

The process of step (S53) is the same as the process of step (S33) in FIG. 8, and corresponds to the process of step (S33) with "the inspection hole (25)" and "the maintenance position" replaced with "the gate (14)" and "the loading/unloading position," respectively.

### <Step (S54)>

If it is determined in step (S52) that "power is not supplied from the power source to the cooling unit (20a)," and it is determined in step (S53) that "the position of the shipping container (10) is not the loading/unloading position," the control unit (75) determines that the opening of the gate (14) detected in step (S51) is "unusual opening."

### <Step (S55)>

Next, the control unit (75) reports that the opening of the gate (14) detected in step (S51) is "unusual opening." In this example, the control unit (75) controls the alert unit (74) so that the alert unit (74) reports that the opening of the gate (14) is unusual opening.

The process of step (S55) is the same as the process of step (S14) in FIG. 6, and corresponds to the process of step (S14) with "the inspection hole (25)" replaced with "the gate (14)."

### [Advantages of Second Embodiment]

As described above, in the container system (1) of the second embodiment, the aperture (17) is the gate (14) through which contents are loaded into and unloaded from the shipping container (10). The first information about the operating state of the cooling unit (20a) includes the information showing whether power is supplied from the power source to the cooling unit (20a). The control unit (75) outputs the second information for determining whether unusual opening of the aperture (17) (the gate (14)) is present based on "the information showing whether power is supplied from the power source to the cooling unit (20a)" when the aperture (17) (the gate (14)) is opened and "the information for checking whether contents need to be loaded into and unloaded from the shipping container (10)" when the aperture (17) (the gate (14)) is opened.

Usual opening of the gate (14) is often conducted while whether power is supplied from the power source to the cooling unit (20a) and whether contents need to be loaded into and unloaded from the shipping container (10) are taken into consideration. For example, if contents need to be loaded into and unloaded from the shipping container (10), the gate (14) is opened while power is supplied from the power source to the cooling unit (20a) to drive the cooling unit (20a). In contrast, unusual opening of the gate (14) is often conducted while whether power is supplied from the power source to the cooling unit (20a) and whether contents need to be loaded into and unloaded from the shipping container (10) are not taken into consideration.

Thus, it is possible to more accurately determine unusual opening of the gate (14) by outputting the information for determining whether unusual opening of the gate (14) is present based on whether power is supplied from the power source to the cooling unit (20a) when the gate (14) is opened and whether contents need to be loaded into and unloaded from the shipping container (10) when the gate (14) is opened.

In the container system (1) of the second embodiment, the information for checking whether contents need to be loaded into and unloaded from the shipping container (10) includes the information showing the position of the shipping container (10).

According to the above configuration, it is possible to check whether contents need to be loaded into and unloaded from the shipping container (10) based on the information showing the position of the shipping container (10) (specifically, whether the position of the shipping container (10) is a position at which contents are loaded into and unloaded from the shipping container (10)).

### (First Variation of Second Embodiment)

The container system (1) of the first variation of the second embodiment is different in the unusual opening monitoring process from the container system (1) of the second embodiment. The other configuration and processes of the container system (1) of the first variation of the second embodiment are the same as the configuration and processes of the container system (1) of the second embodiment.

In the first variation of the second embodiment, the information for checking whether contents need to be loaded into and unloaded from the shipping container (10) includes the information showing the schedule for the contents being loaded into unloaded from the shipping container (10).

### [Flow of Unusual Opening Monitoring Process]

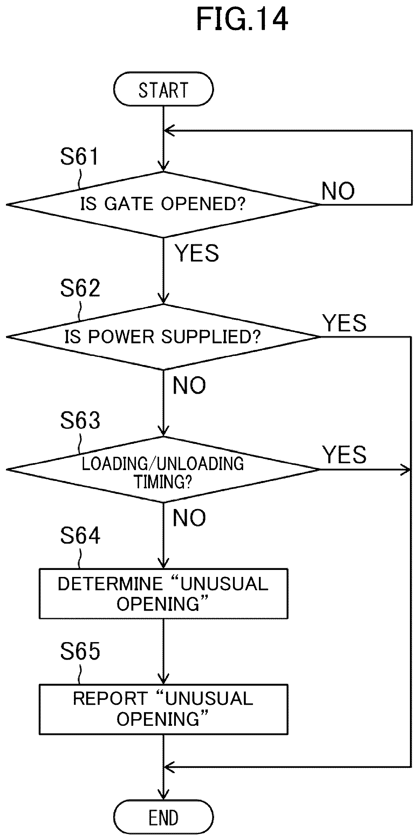

Next, the flow of the unusual opening monitoring process of the second embodiment will be described with reference to FIG. 14. The control unit (75) repeats the following process. Steps (S61, S62, S64, S65) of the unusual opening monitoring process of FIG. 14 are the same as steps (S51, S52, S54, S55) of FIG. 13, and thus their descriptions are omitted. In other words, the unusual opening monitoring process of FIG. 14 includes steps (S51, S52, S54, S55) of FIG. 13 and also includes step (S63).

### <Step (S63)>

If it is determined in step (S62) that "power is not supplied from the power source to the cooling unit (20a)," the control unit (75) determines whether it is time to load contents into or unload contents from the shipping container (10) (the loading/unloading timing)." If the time when the gate (14) is opened is within the loading/unloading timing, the process of step (S64) is conducted; otherwise, the process is ended.

The process of step (S63) is the same as the process of step (S43) in FIG. 9, and corresponds to the process of step (S43) with "the inspection hole (25)" and "the maintenance timing" replaced with "the gate (14)" and "the loading/unloading timing," respectively.

### [Advantages of First Variation of Second Embodiment]

The container system (1) of the first variation of the second embodiment can provide the same advantages as those of the container system (1) of the second embodiment.

In the container system (1) of the first variation of the second embodiment, the information for checking whether contents need to be loaded into and unloaded from the shipping container (10) includes the information showing the schedule for the contents being loaded into and unloaded from the shipping container (10). According to the above configuration, it is possible to check whether contents need to be loaded into and unloaded from the shipping container (10) based on the schedule for the contents being loaded and unloaded.

### (Other Embodiments)

The above embodiments may be modified as follows.

In the unusual opening monitoring process, the control unit (75) may transmit (output) the second information for determining whether unusual opening of the aperture (17) is present to an external device located outside the container system (1) through the communication unit (72). Such an external device (not shown) is used by an administrator of the shipping container (10). According to this configuration, it is possible to report to the administrator whether unusual opening of the aperture (17) of the shipping container (10) is present. For example, the second information may be the information in which "the determination result showing that opening of the aperture (17) is unusual opening" is linked with "the time when the aperture (17) was opened."

The second information for determining whether unusual opening of the aperture (17) is present may be the information in which "the time when the aperture (17) was opened" is linked with "the information about the operating state of the cooling unit (20a) at that time." Whether unusual opening of the aperture (17) is present may be determined by the control unit (75) or may be determined by a device (not shown) that inputs the second information output from the control unit (75).

For example, a control unit (not shown) of a device used by the administrator of the shipping container (10) may determine whether unusual opening of the aperture (17) is present based on the second information output from the control unit (75). The control unit of the device may use a display (not shown) of the device to display the second information output from the control unit (75). The administrator of the shipping container (10) may determine whether unusual opening of the aperture (17) is present based on the second information displayed on the display of the device.

The control unit (75) may be provided inside the shipping container (10) or may be provided outside the shipping container (10). The control unit (75) may consist of a single processor or may consist of a plurality of processors. The plurality of processors may be arranged together in one single case, or may be arranged in separate cases. Similarly, the storage unit (73) may consist of a single memory or may consist of a plurality of memories.

The expressions of "first," "second," and "third" described above are used to distinguish the terms to which these expressions are given, and do not limit the number and order of the terms.

While the embodiments and variations thereof have been described above, it will be understood that various changes in form and details may be made without departing from the spirit and scope of the claims. The elements of the embodiment, the variations thereof, and the other embodiments may be combined and replaced with each other.

### INDUSTRIAL APPLICABILITY

As described above, the present disclosure is useful for a container system.

### DESCRIPTION OF REFERENCE CHARACTERS

- 1: Container System
- 10: Shipping Container
- 11: Container Body
- 12: Internal Space
- 13: Aperture
- 14: Gate
- 15: Door
- 16: Door Opening/Closing Detector
- 17: Aperture
- 18: Opening/Closing Portion
- 19: Detector
- 20: Refrigeration Apparatus
- 20a: Cooling Unit
- 25: Inspection Hole
- 25a: First Inspection Hole
- 25b: Second Inspection Hole
- 40: Compressor
- 41: External Heat Exchanger
- 42: External Blower
- 44: Internal Heat Exchanger
- 45: Internal Blower
- 50: Refrigerant Circuit
- 61: Suction Temperature Sensor
- 62: Blowout Temperature Sensor
- 70: Electric Component Box
- 71: Power Source Unit
- 72: Communication Unit
- 73: Storage Unit
- 74: Alert Unit
- 75: Control Unit
- 80: Blocking Plate
- 80a: First Blocking Plate
- 80b: Second Blocking Plate
- 81: First Locking Part
- 811: First Protruding Part
- 812: First Inserting Part
- 81a: First Locking Hole
- 82: Second Locking Part
- 821: Second Protruding Part
- 822: Second Inserting Part
- 82a: Second Locking Hole
- 83: Central Locking Part
- 831: Third Protruding Part
- 832: Fourth Protruding Part
- 833: Fifth Protruding Part
- 834: Locking Bar
- 83a: Third Locking Hole
- 83b: Fourth Locking Hole
- 83c: Fifth Locking Hole

## Claims

1. A container system comprising:
a shipping container (10) including a container body (11) and a refrigeration apparatus (20) connected to the container body (11); and
a control unit (75),
wherein
the refrigeration apparatus (20) includes a cooling unit (20a) configured to cool an inside of the container body (11),
the shipping container (10) includes an aperture (17) and an opening/closing portion (18) configured to open and close the aperture (17), and
the control unit (75) outputs second information for determining whether unusual opening of the aperture (17) is present based on first information about an operating state of the cooling unit (20a) at a time the aperture (17) is opened.

2. The container system of claim 1, wherein
the aperture (17) is an inspection hole (25) provided for maintenance of the cooling unit (20a).

3. The container system of claim 2, wherein
the first information includes information showing whether the cooling unit (20a) is unusual.

4. The container system of claim 3, wherein
the cooling unit (20a) includes an internal blower (45) configured to circulate air between the inside of the container body (11) and the refrigeration apparatus (20),
the inspection hole (25) is an aperture from which the internal blower (45) is exposed, and
the cooling unit (20a) being unusual means the internal blower (45) being unusual.

5. The container system of any one of claims 2 to 4, wherein
the first information includes information showing whether power is supplied from a power source to the cooling unit (20a).

6. The container system of any one of claims 2 to 5, wherein
the control unit (75) outputs the second information based on the first information at a time the aperture (17) is opened and information for checking whether maintenance of the cooling unit (20a) needs to be conducted when the aperture (17) is opened.

7. The container system of claim 6, wherein
the information for checking whether maintenance of the cooling unit (20a) needs to be conducted includes information showing a position of the shipping container (10) or information showing a schedule for maintenance of the cooling unit (20a).

8. The container system of claim 1, wherein
the aperture (17) is a gate (14) through which a content is loaded into and unloaded from the shipping container (10),
the first information includes information showing whether power is supplied from a power source to the cooling unit (20a), and
the control unit (75) outputs the second information based on the information showing whether power is supplied from the power source to the cooling unit (20a) when the aperture (17) is opened and information for checking whether a content needs to be loaded into and unloaded from the shipping container (10) when the aperture (17) is opened.

9. The container system of claim 8, wherein
the information for checking whether the content needs to be loaded into and unloaded from the shipping container (10) includes information showing a position of the shipping container (10) or information showing the schedule for the content being loaded into and unloaded from the shipping container (10).

10. The container system of any one of claims 2 to 7, comprising:
a detector (19) configured to detect whether the opening/closing portion (18) opens or closes the inspection hole (25)
wherein
the control unit (75) detects opening of the inspection hole (25) based on a detection result obtained by the detector (19).

11. The container system of claim 10, wherein
the inspection hole (25) includes a first inspection hole (25a) and a second inspection hole (25b) arranged in a predetermined direction;
the opening/closing portion (18) includes
a first blocking plate (80a) capable of blocking the first inspection hole (25a),
a second blocking plate (80b) capable of blocking the second inspection hole (25b),
a first locking part (81) that is provided on part of the first inspection hole (25a) away from the second inspection hole (25b) in the predetermined direction, and that is capable of locking the first blocking plate (80a),
a second locking part (82) that is provided on part of the second inspection hole (25b) away from the first inspection hole (25a) in the predetermined direction, and that is capable of locking the second blocking plate (80b), and
a central locking part (83) that is provided between the first inspection hole (25a) and the second inspection hole (25b) in the predetermined direction, and that is capable of locking the first blocking plate (80a) and the second blocking plate (80b);
the first blocking plate (80a) and the second blocking plate (80b) are locked by the first locking part (81), the second locking part (82), and the central locking part (83) while blocking the first inspection hole (25a) and the second inspection hole (25b); and
when the central locking part (83) unlocks the first blocking plate (80a) and the second blocking plate (80b), the detector (19) detects the opening of the inspection hole (25).

12. The container system of claim 11, wherein
the first locking part (81)
includes
a first protruding part (811) protruding from a wall of the shipping container (10) and provided with a first locking hole (81a), and
a first inserting part (812) that protrudes from an edge of the first blocking plate (80a) away from the second inspection hole (25b) in the predetermined direction, where the first blocking plate (80a) blocks the first inspection hole (25a), and that is capable of being inserted into the first locking hole (81a), and
locks the first blocking plate (80a) by the first inserting part (812) being inserted into the first locking hole (81a);
the second locking part (82)
includes
a second protruding part (821) protruding from the wall of the shipping container (10) and provided with a second locking hole (82a), and
a second inserting part (822) that protrudes from an edge of the second blocking plate (80b) away from the first inspection hole (25a) in the predetermined direction, where the second blocking plate (80b) blocks the second inspection hole (25b), and that is capable of being inserted into the second locking hole (82a), and
locks the second blocking plate (80b) by the second inserting part (822) being inserted into the second locking hole (82a); and
the central locking part (83)
includes
a third protruding part (831) protruding from the wall of the shipping container (10) and provided with a third locking hole (83a),
a fourth protruding part (832) that protrudes from an edge of the first blocking plate (80a) close to the second inspection hole (25b) in the predetermined direction, where the first blocking plate (80a) blocks the first inspection hole (25a), and that is provided with the fourth locking hole (83b),
a fifth protruding part (833) that protrudes from an edge of the second blocking plate (80b) close to the first inspection hole (25a) in the predetermined direction, where the second blocking plate (80b) blocks the second inspection hole (25b), and that is provided with the fifth locking hole (83c), and
a locking bar (834) that is capable of being inserted into the third locking hole (83a), the fourth locking hole (83b), and the fifth locking hole (83c), and
locks the first blocking plate (80a) and the second blocking plate (80b) by the locking bar (834) being inserted into the third locking hole (83a), the fourth locking hole (83b), and the fifth locking hole (83c).

13. The container system of any one of claims 1 to 12, wherein
if the opening of the aperture (17) is the unusual opening, the control unit (75) reports that the opening of the aperture (17) is the unusual opening.

14. The container system of any one of claims 1 to 13, wherein
the control unit (75) detects the opening of the aperture (17) based on a change in a temperature or pressure in the shipping container (10).

15. The container system of any one of claims 1 to 14, comprising:
an illuminance sensor (65) configured to detect an illuminance in the shipping container (10),
wherein
the control unit (75) detects the opening of the aperture (17) based on a change in the illuminance in the shipping container (10) detected by the illuminance sensor (65).
